# EUROPEAN PATENT APPLICATION

(11) **EP 2 840 525 A1**
(43) Date of publication of application: **25.02.2015**
(21) Application number: 14177796.1
(22) Date of filing: 21.07.2014
(51) Int. Cl.: G06F 21/34

(54) **Information processing apparatus, method, and program**

(30) Priority: 16.08.2013 JP 2013169258
(71) Applicant: FUJITSU LIMITED, Kawasaki-shi, Kanagawa 211-8588 (JP)
(72) Inventor: Nakagawa, Masato, Kanagawa, 211-8588 (JP)
(74) Representative: Hoffmann Eitle

(57) **Abstract**

An information processing apparatus, including a plurality of information processing elements, includes a transmission unit, provided in a first information processing element newly connected to the information processing apparatus, that transmits identification information of the first information processing element to a second information processing element among the plurality of information processing elements; a first control unit, provided in the second information processing element, that assigns address information to identification information of the first information processing element, generates element information including address information corresponding to identification information of the first information processing element and each of already implemented information processing elements, and returns the element information to the first information processing element; and a second control unit, provided in the first information processing element, that performs communication with an already implemented information processing element by using address information included in the element information received from the second information processing element.

## Description

### FIELD

The embodiments discussed herein are related to an information processing apparatus, an information processing method, and an information processing program.

### BACKGROUND

A building block system (also referred to as a BB system hereinafter) that implements a large scale information processing apparatus by connecting a plurality of information processing elements is known. Each information processing element of a BB system includes a processor and a memory and is capable of processing information. In addition, each information processing element has a communication function and is capable of processing information in cooperation with another information processing element. Each information processing element is accommodated in a case independently. Accordingly, in the explanations below, an information processing element is also referred to as a "case".

An information processing apparatus of a BB system may achieve a greater scale by newly adding a case to a network including a case that is already operating. When a new case is added to a BB system, the administrator manually sets parameters etc. used for communications with the new case. Thereafter, the administrator performs the confirmation of accesses between the new case and the network of the BB system.

As a technique related to registration of setting information, a technique is known that servers inquiry and register environmental definitions each other in a network in which a plurality of servers are connected (for example Patent Document 1).
[Patent Document 1] : Japanese Laid-open Patent Publication No. 2000-29808

### SUMMARY

When a new BB is to be added to an operating BB system that includes many cases, the registration operation, which is performed by the administrator, of setting information related to a network is troublesome. According to one aspect, it is an object of the present invention to simplify the process of adding a new information processing element to an information processing apparatus including a plurality of information processing elements.

According to an aspect of the embodiments, an information processing apparatus including a plurality of information processing elements, the information processing apparatus includes a transmission unit, a first control unit, and a second control unit. The transmission unit is provided in a first information processing element newly connected to the information processing apparatus, and transmits identification information of the first information processing element to a second information processing element among the plurality of information processing elements. The first control unit is provided in the second information processing element, and assigns address information to identification information of the first information processing element, generates element information including address information corresponding to identification information of each information processing element already implemented in the information processing apparatus and identification information of the first information processing element, and returns the element information to the first information processing element, when identification information of the first information processing element is received from the first information processing element. The second control unit is provided in the first information processing element, and performs communication with an information processing element already implemented in the information processing apparatus by using, as a communication source, address information included in the element information received from the second information processing element.

### BRIEF DESCRIPTION OF DRAWINGS

FIG. 1A illustrates an example of a method of adding a case to a BB system;
FIG. 1B illustrates an example of a method of adding a case to a BB system;
FIG. 2 illustrates an example of a hardware configuration of a case;
FIG. 3A is a sequence diagram illustrating an example of a method of adding a case to a BB system;
FIG. 3B is a sequence diagram illustrating an example of a method of adding a case to a BB system;
FIG. 3C is a sequence diagram illustrating an example of a method of adding a case to a BB system;
FIG. 3D is a sequence diagram illustrating an example of a method of adding a case to a BB system;
FIG. 4 is a sequence diagram illustrating an example of a process of establishing an encrypted communication;
FIG. 5 is a sequence diagram illustrating an example of a process of network setting;
FIG. 6 illustrates an example of a process related to the detection of an additional case;
FIG. 7 illustrates an example of setting information used in an encrypted communication;
FIG. 8 is a flowchart that explains an example of a process of an additional case after turning on the power;
FIG. 9 is a flowchart explaining an example of a process of forming a communication path;
FIG. 10 is a flowchart that explains an example of a setting process of information related to a network of an additional case;
FIG. 11 is a flowchart that explains an example of a process of assigning an IP address to an additional case;
FIG. 12 is a flowchart that explains an example of an access confirmation process from an additional case;
FIG. 13 is a flowchart that explains an example of an access confirmation process on the side of a case that belongs to a BB system; and
FIG. 14 explains an example of a process in which a master case is replaced when a failure has occurred.

### DESCRIPTION OF EMBODIMENTS

Hereinafter, detailed explanations will be given for the present embodiment by referring to the drawings.

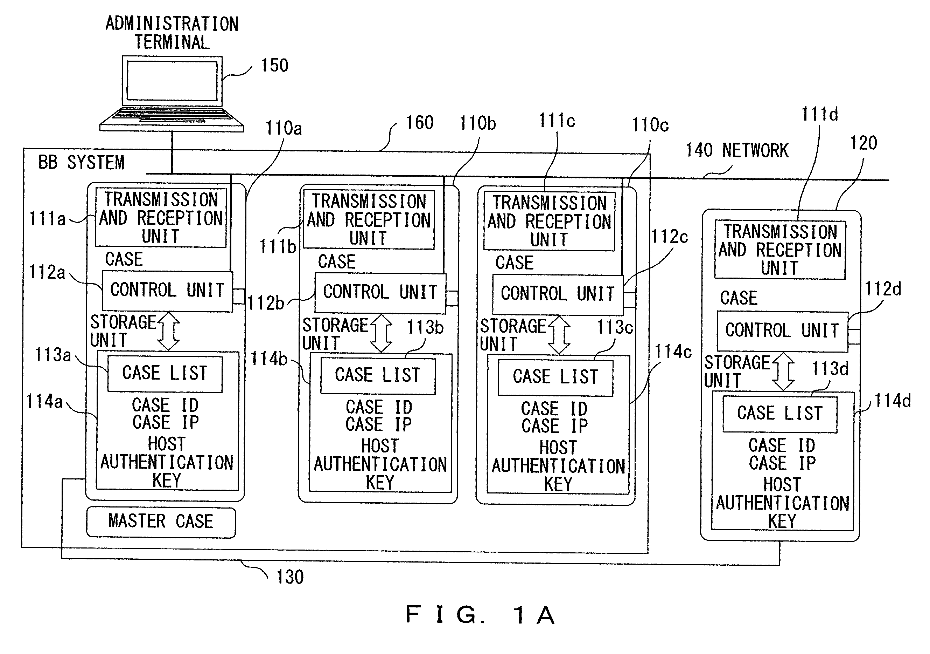

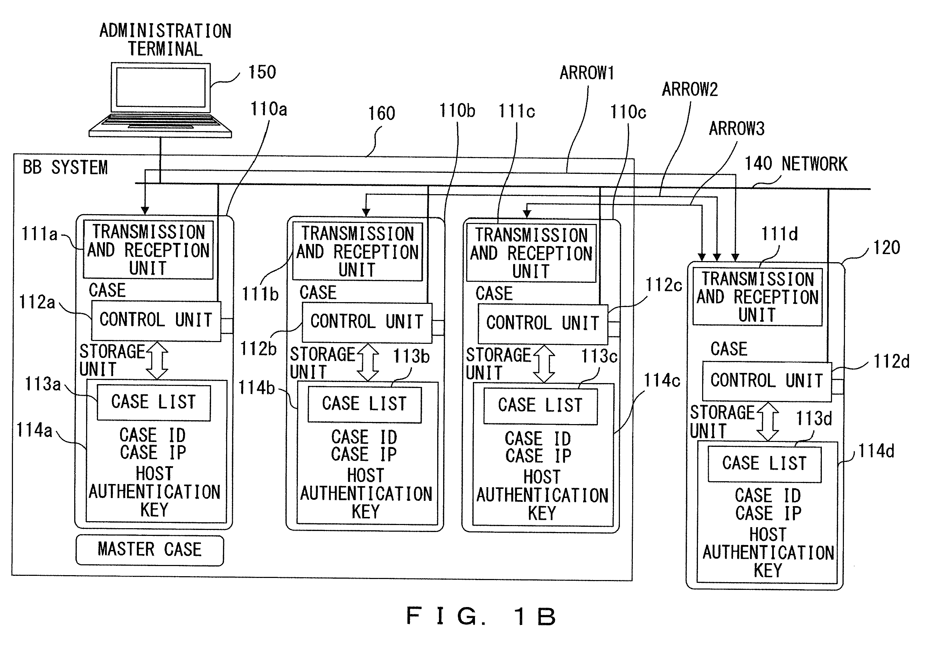

FIG. 1A illustrates an example of a method of adding a case to a BB system. An administration terminal 150 is used when an administrator performs some operations for a BB system 160. The BB system 160 is a system into which cases 110a through 110c are incorporated. The cases 110a through 110c coordinate with each other via a network 140. The network 140 is an encrypted communication path. An additional case 120 is a case to be incorporated into the BB system 160. The additional case 120 communicates with any of the cases 110a through 110c and automatically performs the incorporation setting into the BB system. The additional case 120 illustrated in FIG. 1A is connected to the case 110a via a serial cable 130. The additional case 120 illustrated in FIG. 1 communicates with the case 110a so as to automatically perform the incorporation setting into the BB system.

Cases include transmission and reception units 111 (111a through 111d), control units 112 (112a through 112d) and storage units 113 (113a through 113d). The transmission and reception unit 111 receives a signal input to the case and transmits a signal to be output. The control unit 112 controls the process of incorporation setting into the BB system of the additional case 120. The storage unit 113 stores a case list 114, IP address information, and a host authentication key. A case list includes information related to a case that has already been incorporated into the BB system. The case lists 114 (114a through 114c) included in the cases 110a through 110c include information of case IDs (Identifications), IP addresses, host public keys, access confirmation, etc. which are associated with the respective cases 110a through 110c. Since the additional case 120 is not incorporated into the BB system, the additional case 120 does not have a case list, and an IP address is not set. Hereinafter, explanations will be sequentially given for an automation process of incorporation setting into the BB system.
(1) The control unit 112d of the additional case 120 generates a prescribed signal when the power of the additional case 120 is turned on. The control unit 112d transmits a prescribed signal to the transmission and reception unit 111d.
(2) The transmission and reception unit 111d of the additional case 120 transmits a prescribed signal to the case 110a via the serial cable 130.
(3) The transmission and reception unit 111a of the case 110a receives the prescribed signal and transmits it to the control unit 112a.
(4) By receiving the prescribed signal from the additional case 120, the control unit 112a of the case 110a detects a case that has been added newly to the BB system 160 (i.e., the additional case 120). Then, the control unit 112a of the case 110a and the control unit 112d of the additional case 120 construct a TCP/IP path by for example the PPP and share a common key for encrypted communication between the case 110a and the additional case 120.
(5) The control unit 112d transmits to the transmission and reception unit 111d information that includes the case ID and the host public key and that is related to the additional case 120.
(6) The transmission and reception unit 111d transmits the information related to the additional case 120 to the case 110a via communication that has been encrypted by using the common key.
(7) The transmission and reception unit 111a receives the information related to the additional case 120 and transmits it to the control unit 112a.
(8) The control unit 112a assigns an IP address to the additional case 120.
(9) The control unit 112a associates the IP address, the case ID and the host public key of the additional case 120, and adds and registers them in the case list 114a of the storage unit 113a.
(10) The control unit 112a transmits the case list 114a to the transmission and reception unit 111a.
(11) The transmission and reception unit 111a transmits the case list 114a to the additional case 120.
(12) When the transmission and reception unit 111d receives the case list 114a, the transmission and reception unit 111d transmits it to the control unit 112d.
(13) The control unit 112d stores in the storage unit 113d information included in the case list 114a. This process generates the case list 114d.
(14) The control unit 112d extracts IP address information corresponding to the additional case 120 included in the case list 114d.
(15) The control unit 112d sets the extracted IP address information in the storage unit 113.

Communications between the case 110a and the additional case 120 in processes (5) through (15) are communications encrypted by using a common key. By processes (1) through (15), the administrator can save the manual setting operations related to IP address and encryption for the additional case 120. In the process in which the administrator accesses the additional case 120 or the case 110 so as to perform a setting related to IP addresses and host public keys, IP addresses and host public keys are communicated without an encryption. However, by transmitting public keys and case information in communications encrypted beforehand by sharing a common key, safer communications are realized. The case ID registered in (9) is identification information corresponding to the additional case. Identification information is different for each case. Also, the host public key registered in (9) is used for the host authentication when communications are performed between cases. A host public key is generated in association with a host secret key at the initial activation of a case. The host public key and the host secret key are hold in the case which generated them. When there is an instruction to update a host authentication key based on prescribed manipulations by a user, a new host public key and host secret key are generated.

All cases belonging to the BB system share information related to case IDs in the case lists 114. A case ID is identification information of case which corresponds to a case belonging to the BB system. All cases belonging to the BB system share information related to IP addresses in the case lists 114. Information related to an IP address may include information related to a network such as a net mask. All cases belonging to the BB system share information related to host public keys in the case lists 114. The host public keys are registered in association with case IDs in the case lists 114. The host authentication key is different for each case. Accordingly, each case has a host public key that corresponds to all cases belonging to the BB system. Each case belonging to the BB system has access confirmation information in the case list 114. As access confirmation information, a result of access confirmation between the case and other cases is stored. Access confirmation is updated upon the activation of the BB system, access confirmation between cases, and a communication failure during an operation.

FIG. 1B illustrates an example of a method of adding a case to the BB system. In FIG. 1B, the same elements as those in FIG. 1A are denoted by the same numbers. When an IP address has been set in the additional case 120, the additional case 120 starts being able to perform communications with the cases 110a through 110c. The additional case 120 performs access confirmation with the cases 110a through 110c. The process related to the access confirmation will be described below.
(16) The control unit 112d transmits the case list 114d to the transmission and reception unit 111d.
(17) The transmission and reception unit 111d transmits the case list 114d to the cases 110a through 110c via encrypted communications.
(18) The transmission and reception unit 111a of the case 110a transmits the received case list 114d to the control unit 112a.
(19) The control unit 112a extracts information related to the additional case 120 from information included in the received case list 114d, and registers it in the case list 114a. The control unit 112a transmits the case list 114a to the transmission and reception unit 111a.
(20) The transmission and reception unit 111a transmits the case list 114a to the additional case 120.
(21) The transmission and reception unit 111d receives the case list 114a. The transmission and reception unit 111d transmits the received case list 114a to the control unit 112d.
(22) The control unit 112d registers in the case list 114d the fact that access confirmation with the case 110a was able to be performed. Further, the fact that the access confirmation was able to be performed is also registered in the case list 114a.

The additional case 120 also performs the processes of (18) through (22) together with the cases 110b and 110c. In FIG. 1B, the process between the additional case 120 and the case 110a is indicated by arrow 1. In FIG. 1B, the process between the additional case 120 and the case 110b is indicated by arrow 2. In FIG. 1B, the process between the additional case 120 and the case 110c is indicated by arrow 3.
(23) When access confirmation with all cases has been terminated, the additional case 120 terminates the process.

When there are a great number of cases that belongs to the BB system, it is troublesome for an administrator to perform the operations of access confirmation manually. It is possible to automatically make a diagnosis that the additional case 120 has normally been incorporated into the BB system. In addition, by transmitting case lists bidirectionally, bidirectional diagnoses are made.

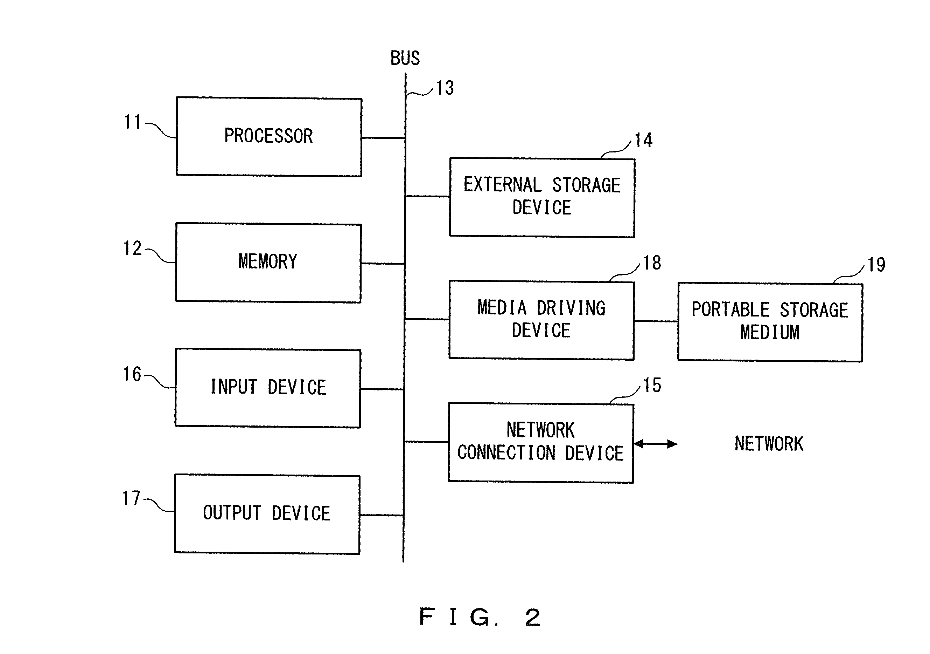

FIG. 2 illustrates an example of a hardware configuration of a case. The cases 110a through 110c and the additional case 120 have a processor 11, a memory 12, a bus 13, an external storage device 14 and a network connection device 15, respectively. Further, the cases 110a through 110c and the additional case 120 may optionally include an input device 16, an output device 17 and a media driving device 18 , respectively. The case 110a through 110c and the additional case 120 may sometimes be implemented by for example a computer etc. In addition, the cases 110a through 110c and the additional case 120 may sometimes be implemented by a system board etc.

The processor 11 may be an arbitrary processing circuit that includes a Central Processing Unit (CPU). The processor 11 executes the respective processes that are executed by the control unit 112. Also, the processor 11 may execute for example a program stored in the external storage device 14. The memory 12 operates as the storage unit 113 and appropriately stores data obtained through the operations of the processor 11 and data used for processes performed by the processor 11. The network connection device 15 is used for communications with other devices.

The input device 16 is implemented by for example a button, a keyboard, a mouse, etc., and the output device 17 is implemented by a display device etc. The bus 13 connects the processor 11, the memory 12, the input device 16, the output device 17, the external storage device 14, the media driving device 18, and the network connection device 15 in such a manner that data exchange is possible between them. The external storage device 14 stores a program, data, etc. and appropriately provides stored information to the processor 11 etc. The media driving device 18 can output data in the memory 12 and the external storage device 14 to a portable storage medium 19, and can also read a program, data, etc. from the portable storage medium 19. The portable storage medium 19 may be an arbitrary portable storage medium including a floppy disk, a Magnet-Optical (MO) disk, a Compact Disc Recordable (CD-R), and a Digital Versatile Disk Recordable (DVD-R).

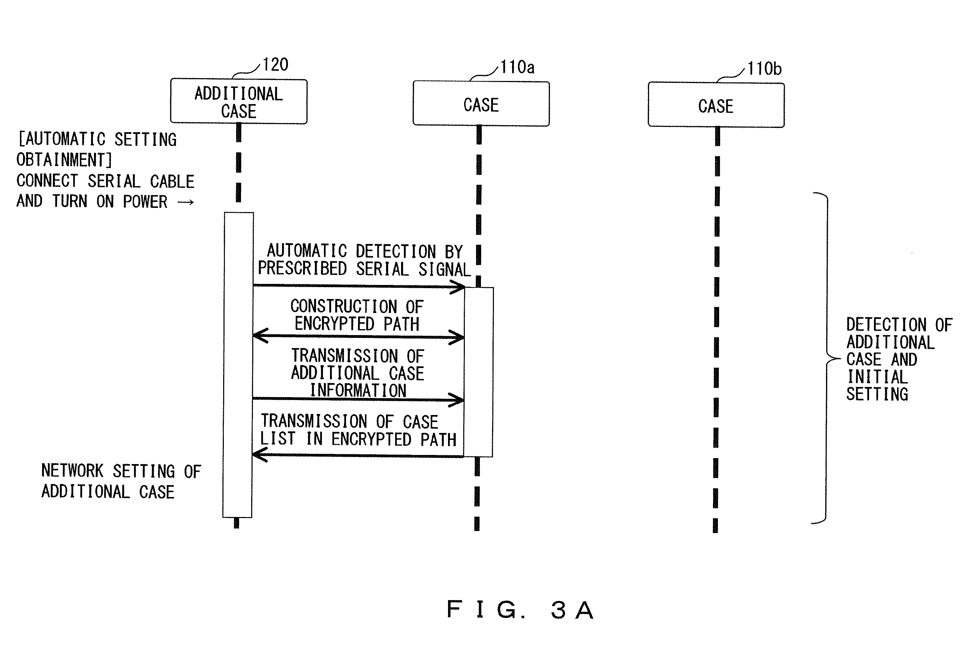

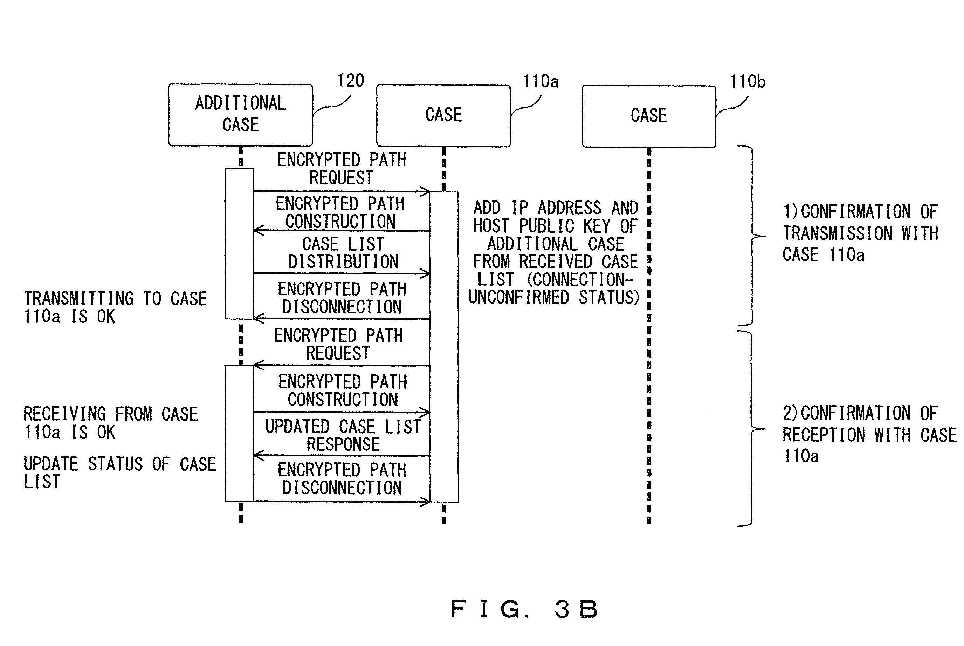

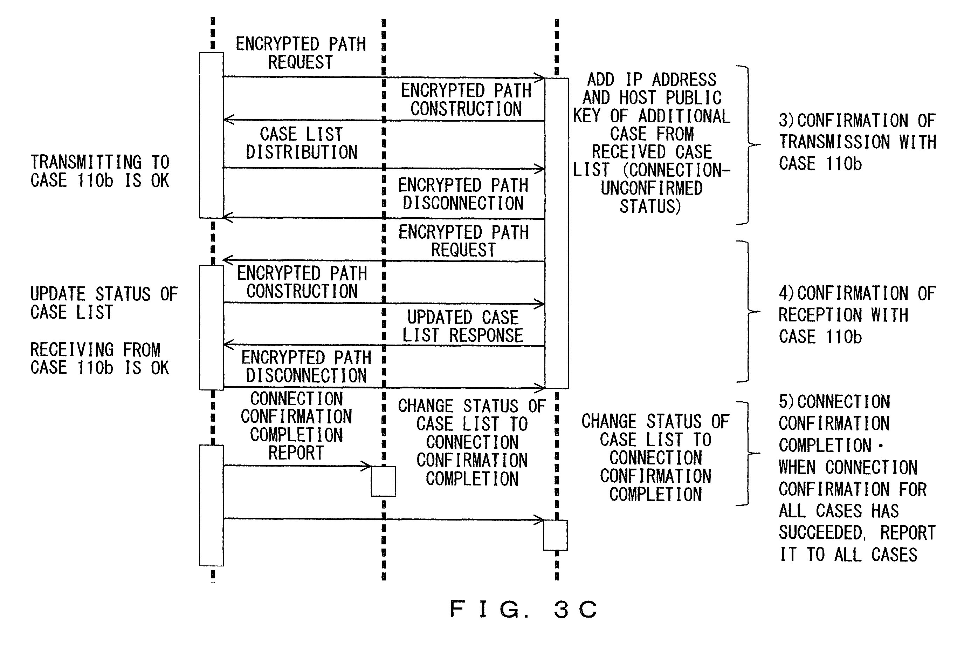

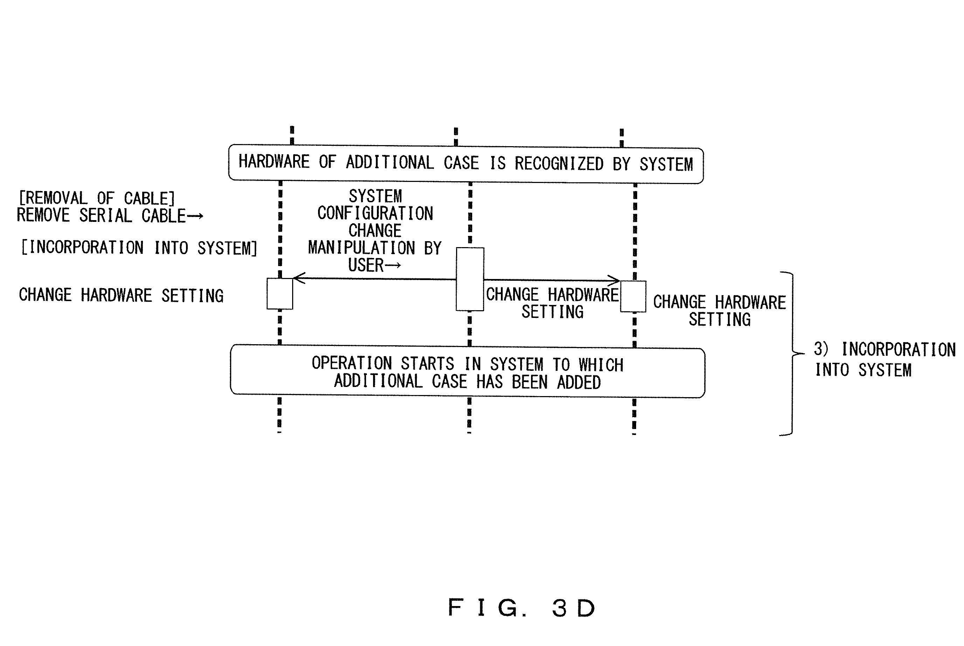

FIG. 3A is a sequence diagram illustrating an example of a method of adding a case to the BB system. The sequence diagram illustrated in FIG. 3 illustrates a communication process among the additional case 120, the case 110a, and the case 110b in FIG. 1. The case 110a is set as a master case of the BB system so as to accommodate, as a representative, communications with a case to be added newly. Hereinafter, sequential explanations will be given for the process of adding a case to the BB system.

### <Detection and setting of additional case>

The additional case 120 and the case 110a are connected via a serial cable. When the power of the additional case 120 is turned on, the additional case 120 transmits a prescribed signal to the case 110a. When the case 110a receives the prescribed signal, the case 110a detects that the power of the additional case 120 has been turned on. When the case 110a detects that the power of the additional case 120 is turned on, the case 110a forms a TCP/IP path with the additional case 120 using the PPP (Point-to-Point Protocol). The case 110a and the additional case 120 share a common key for communications so that they can perform encrypted communications with each other.

The additional case 120 transmits information related to the additional case 120 such as the case ID, a host public key, etc. to the case 110a. The case ID and the host public key are transmitted in an encrypted state by using a common key for communications. Next, the case 110a assigns an IP address to the additional case 120. The IP address assigned to the additional case 120 is not used by other cases in the BB system, and is selected from among prescribed addresses to be used in the BB system.

The case 110a registers, in the case list, information in which the IP address, the case ID and the host public key of the additional case 120 are associated. The case 110a transmits the case list to the additional case 120. The additional case 120 extracts the IP address corresponding to the additional case 120 from the received case list, and sets the address.

FIGs. 3B through 3D are a sequence diagram illustrating an example of a method of adding a case to the BB system.

### <Access confirmation>

The process of access confirmation is performed after "detection and setting of additional case" explained in FIG. 3A. The additional case 120 makes access confirmation for all cases incorporated into the BB system. The additional case 120 extracts information of a case incorporated into the BB system from the case list. In the example in FIG. 3, the cases 110a and 110b are cases incorporated into the BB system. Regarding the access confirmation process, the explanations will be given in the order of the cases 110a and 110b, however, this does not limit the order of the processes.

The additional case 120 transmits, to the case 110a, a forming request of an encrypted communication path. For this encrypted communication path, a host public key and a host authentication key are used. The case 110a forms an encrypted communication path between the additional case 120 and the case 110a. The additional case 120 distributes the case list to the case 110a. The case 110a adds to the case list of the case 110a information of the IP address and the host public key of the additional case 120 from the received case list. In the case list of the case 110a, the additional case 120 is registered as a case whose access has not been confirmed. Thereafter, the case 110a disconnects the encrypted communication path. The additional case 120 determines that the transmission confirmation to the case 110a is OK.

Next, the case 110a transmits a forming request of an encrypted communication path to the additional case 120. The additional case 120 forms an encrypted communication path between the additional case 120 and the case 110a. The case 110a transmits a case list to the additional case 120. The additional case 120 receives the case list. The additional case 120 determines that the reception confirmation from the case 110a is OK. The additional case 120 registers in the case list of the additional case 120 that the access confirmation of transmission and reception with the case 110a is OK. Thereby, it is possible to perform bidirectional access confirmation and to perform a test of whether the formation of an encrypted communication path is normal.

The additional case 120 transmits a forming request of an encrypted communication path to the case 110b. The case 110b forms an encrypted communication path between the additional case 120 and the case 110b. The additional case 120 distributes the case list to the case 110b. The case 110b adds to the case list of the case 110b information of the IP address and the host public key of the additional case 120 from the received case list. In the case list of the case 110b, the additional case 120 is registered as a case whose access has not been confirmed. Thereafter, the case 110b disconnects the encrypted communication path. The additional case 120 determines that the transmission confirmation to the case 110b is OK.

Next, the case 110b transmits a forming request of an encrypted communication path to the additional case 120. The additional case 120 forms an encrypted communication path between the additional case 120 and the case 110b. The case 110b transmits a case list to the additional case 120. The additional case 120 receives the case list. The additional case 120 determines that the reception confirmation from the case 110b is OK. The additional case 120 registers in the case list of the additional case 120 that the access confirmation of transmission and reception with the case 110b is OK.

The additional case 120 registers in the case list of the case 110a that the access confirmation of transmission and reception between the additional case 120 and the case 110a is OK. Further, the additional case 120 registers in the case list of the case 110b that access confirmation of transmission and reception between the additional case 120 and the case 110b is OK. Thereby, the hardware of the additional case is incorporated into the BB system.

### <System setting update>

When the additional case 120 has been incorporated into the BB system, the administrator pulls out the serial cable. When an administrator performs a system setting on the case 110a, change information of setting is shared by the additional case 120 and the case 110b and the setting is reflected.

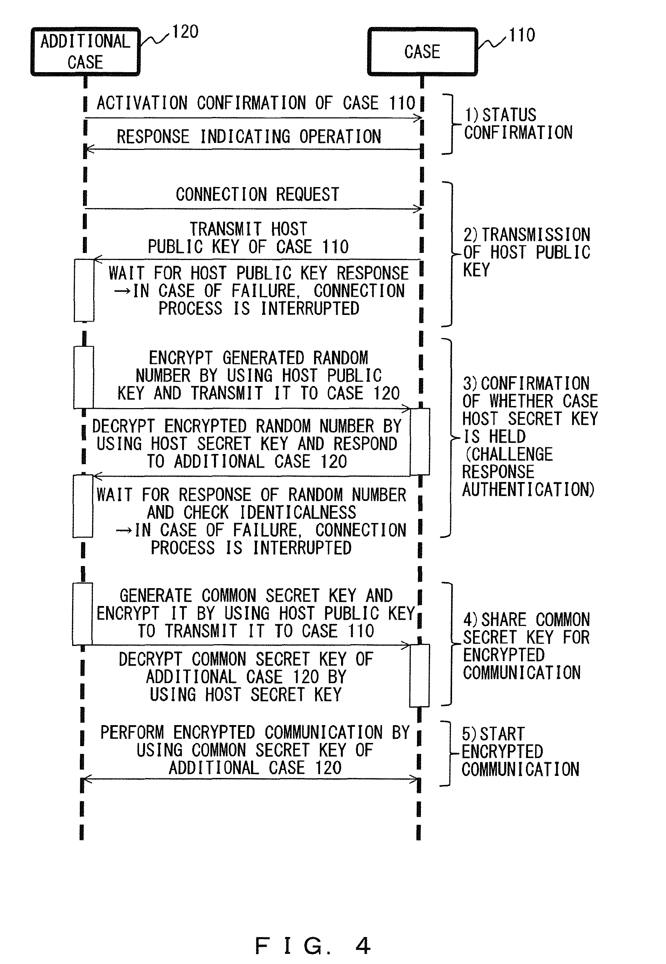

FIG. 4 is a sequence diagram illustrating an example of a process of establishing an encrypted communication. FIG. 4 illustrates an example of a process of establishing an encrypted communication between the additional case 120 and the case 110 illustrated in FIG. 1. The case 110 may be any cases belonging to the BB system and may be either the case 110a or the case 110b illustrated in FIG. 1.

The additional case 120 performs status confirmation of the case 110. The additional case 120 outputs to the case 110 a confirmation signal representing whether or not the case 110 has been activated. When the case 110 has been activated, the case 110 outputs to the additional case 120 a response signal representing that the case 110 is in operation. The additional case 120 receives a response signal representing that the case 110 is in operation.

Next, the additional case 120 outputs to the case 110 a connection request. The case 110 transmits to the additional case 120 a host public key corresponding to the case 110. The additional case 120 receives the host public key. The additional case 120 waits for the transmission of the host public key corresponding to the connection request for a prescribed period of time. When the prescribed period of time has elapsed, the additional case 120 determines that the connection to the case 110 has failed and terminates the connection process.

When the additional case 120 receives the host public key of the case 110, the additional case 120 confirms whether or not the case 110 has the host secret key. The confirmation of a host secret key is performed by using challenge response authentication. The additional case 120 generates random numbers. The additional case 120 encrypts the generated random numbers by using the host public key and reports the encrypted random numbers to the case 110. The case 110 decrypts the encrypted random numbers by using the host secret key and reports the decrypted random numbers to the additional case 120. The additional case 120 receives the random numbers reported from the case 110 and determines whether or not the received numbers are identical to the generated random numbers. The additional case 120 waits for the reception of the random numbers decrypted by the case 110 for a prescribed period of time, and when the prescribed period of time has elapsed, the additional case 120 determines that the connection to the case 110 has failed and terminates the process.

The additional case 120 makes the additional case 120 and the case 110 share a common secret key for an encrypted communication. The additional case 120 generates a common secret key. The additional case 120 encrypts the generated common secret key by using the host public key, and transmits it to the case 110. The case 110 decrypts the encrypted common secret key by using the host secret key. Thereby, the encrypted communication is made possible between the additional case 120 and the case 110.

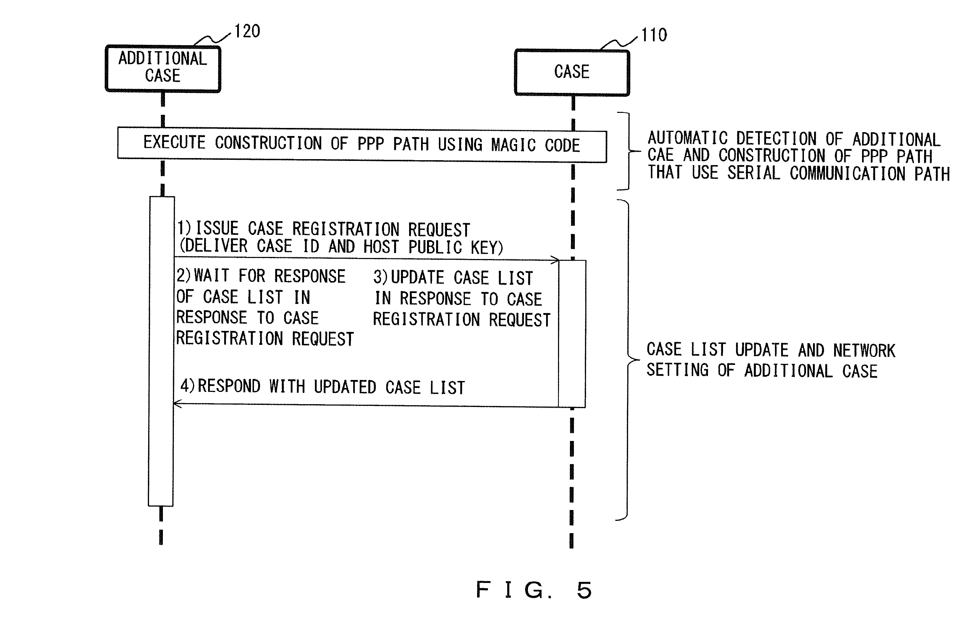

FIG. 5 is a sequence diagram illustrating an example of a process of network setting. FIG. 5 explains the process illustrated in FIG. 3A in more detail, and is a sequence diagram for a process executed after a TCP/IP path using the PPP is formed between the case 110 and the additional case 120. FIG. 5 explains a communication process between the additional case 120 and the case 110. "MAGIC CODE" used for forming a PPP path in FIG. 5 is the prescribed signal generated in the process of (1).

The additional case 120 reports to the case 110 a request that case information related to the additional case 120 be registered. The request that the case information be registered includes a case ID, host public key, etc. The additional case 120 waits for a response to the request that the case information be registered.

In response to the request that the case information be registered, the case 110 adds information related to the additional case to the case list. The case 110 transmits the updated case list to the additional case 120 as a response corresponding to the request that the case information be registered. The additional case 120 extracts the IP addresses associated with the case ID of the additional case 120 from the received case list. The additional case 120 sets the IP address.

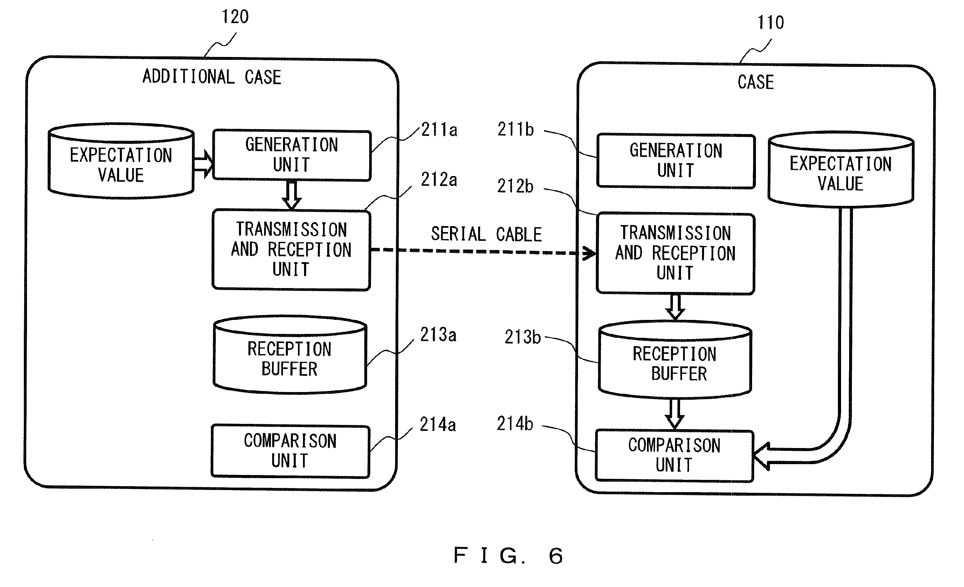

FIG. 6 illustrates an example of a process related to the detection of an additional case. FIG. 6 illustrates an example related to a process in which the case 110 detects the additional case 120 when the additional case 120 is added to the BB system. The additional case 120 in FIG. 6 includes a generation unit 211a, a transmission and reception unit 212a, a buffer 213a, and a comparison unit 214a. The case 110 includes a generation unit 211b, a transmission and reception unit 212b, a buffer 213b, and a comparison unit 214b.

When the additional case 120 is added to the BB system, the generation unit 211a generates a prescribed signal including an expectation value. An expectation value is a parameter, a code, a value, etc. that are prescribed in accordance with the series, the model, and the manufacturer of the case. The generation unit 211a is included in the control unit 112 illustrated in FIG. 1. The additional case 120 and the case 110 are connected via a serial cable. The transmission and reception unit 212a transmits a prescribed signal to the transmission and reception unit 212b via a serial cable. Receiving the prescribed signal, the transmission and reception unit 212b stores the prescribed signal in the reception buffer 213b. The comparison unit 214b reads the prescribed signal from the reception buffer 213b and compares the signal with an expectation value beforehand stored in the case 110. The comparison unit 214b identifies the series, the model, the manufacturer, etc. of the case by using the comparison result. By these processes, the case 110 detects that the additional case 120 has been connected.

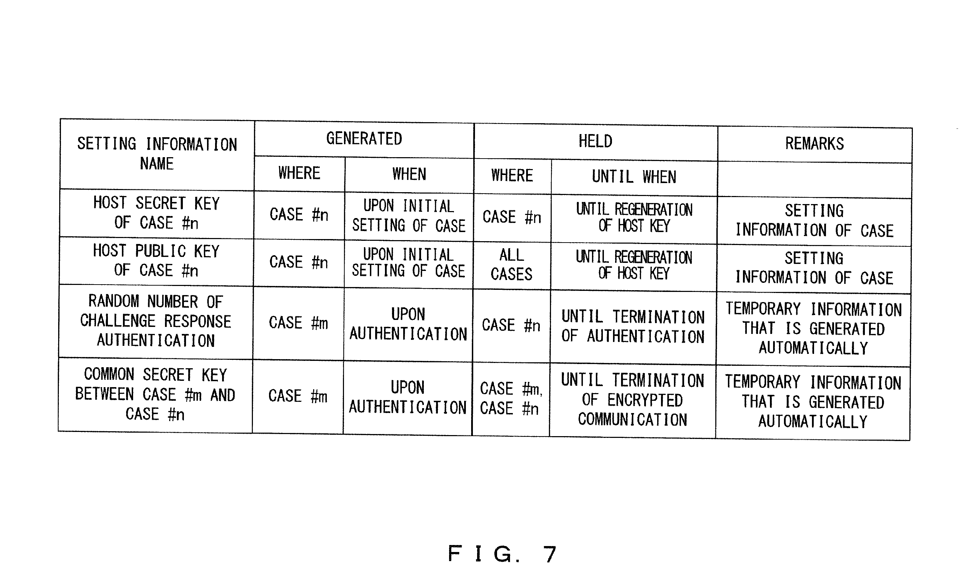

FIG. 7 illustrates an example of setting information used in an encrypted communication. The host secret key of case #n is generated by case #n when a case is to be set initially. The host secret key is held by case #n. Next, the host public key of case #n is generated by case #n as a counterpart of the host secret key when the case is to be set initially. The host public key is held by all cases belonging to the BB system. The same host public key and host secret key are used until a new host key is generated. The random numbers of the challenge response authentication in FIG. 4 are generated by case #m upon authentication. In addition, random numbers are held by case #m until the termination of the authentication. The common secret key between cases #m and #n is generated by case #m. The common secret key is held by cases #m and #n until the termination of the encrypted communications.

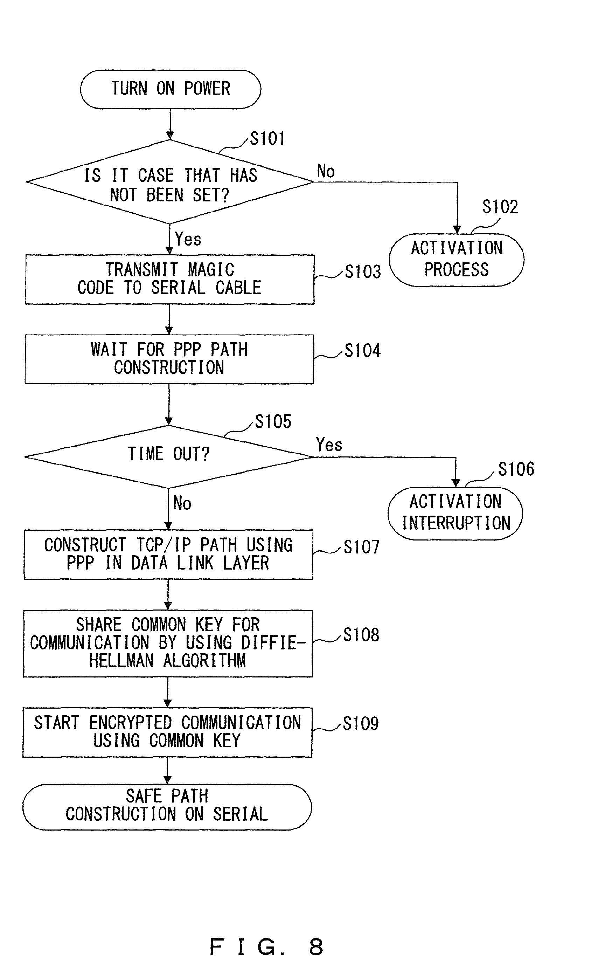

FIG. 8 is a flowchart that explains an example of a process of an additional case after turning on the power. The processes in the respective steps in FIG. 8 are executed by the control unit 112d of the additional case 120 illustrated in FIG. 1. Any cases belonging to the BB system may be the case 110 and either of the cases 110a and 110b can be the case 110. The control unit 112d determines whether or not a setting regarding a network has been performed (step S101). When the setting regarding the network of the additional case 120 has been completed, the control unit 112d activates the additional case 120 as a case belonging to the BB system (step S102 and NO in step S101). The control unit 112d generates a prescribed signal and transmits the prescribed signal (magic code) to a serial cable (step S103 and YES in step S101). The control unit 112d waits for a prescribed period of time until a forming request of a PPP path is transmitted from the case 110 (step S104). The control unit 112d determines whether or not the prescribed period of time in S104 has elapsed (step S105). The control unit 112d terminates the process (step S106 and YES in step S105).

The control unit 112d forms a TCP/IP path using the PPP for the data link layer between the additional case 120 and the case 110 (step S107). The control unit 112d uses the Diffie-Hellman algorithm so as to make the additional case 120 and the case 110 share a common key for communications (step S108). The control unit 112d starts encrypted communications using the common key between the additional case 120 and the case 110 (step S109).

Note that while the Diffie-Hellman algorithm is exemplified as a process of sharing a common key for communications in S108, methods of sharing a common key are not particularly limited. The prescribed period of time in S105 may be changed by an administrator and is not limited to a particular period of time.

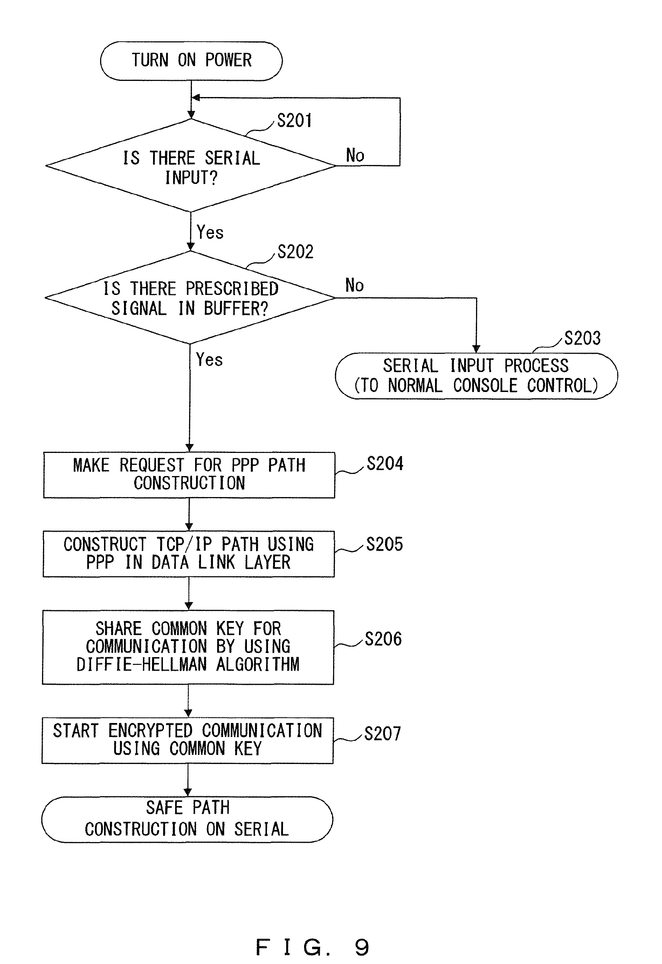

FIG. 9 is a flowchart explaining an example of a process of forming a communication path. The processes in the respective steps in FIG. 9 are executed by any of the control units 112a through 112c of the cases 110a through 110c illustrated in FIG. 1. The process in FIG. 9 may be executed by a case that has already been incorporated into the BB system. In the example in FIG. 9, the case 110a performs communications with the additional case 120 as a representative of the BB system.

The control unit 112a determines whether or not there is a signal input from the serial cable (step S201). The control unit 112a executes the process in S201 (NO in step S201). The control unit 112a determines whether or not there is a prescribed signal in the receiving buffer of the case 110a (step S202 and YES in step S201). The control unit 112a terminates the process and executes the process under control of a console (step S203 and NO in step S202) . The control unit 112a transmits a forming request of a PPP path to the additional case 120 (step S204 and YES in step S202). The control unit 112a forms a TCP/IP path that uses the PPP for the data link layer between the additional case 120 and the case 110 (step S205). The control unit 112a uses the Diffie-Hellman algorithm so as to make the additional case 120 and the case 110 share a common key for communications (step S206). The control unit 112a starts the encrypted communication using the common key between the additional case 120 and the case 110 (step S207).

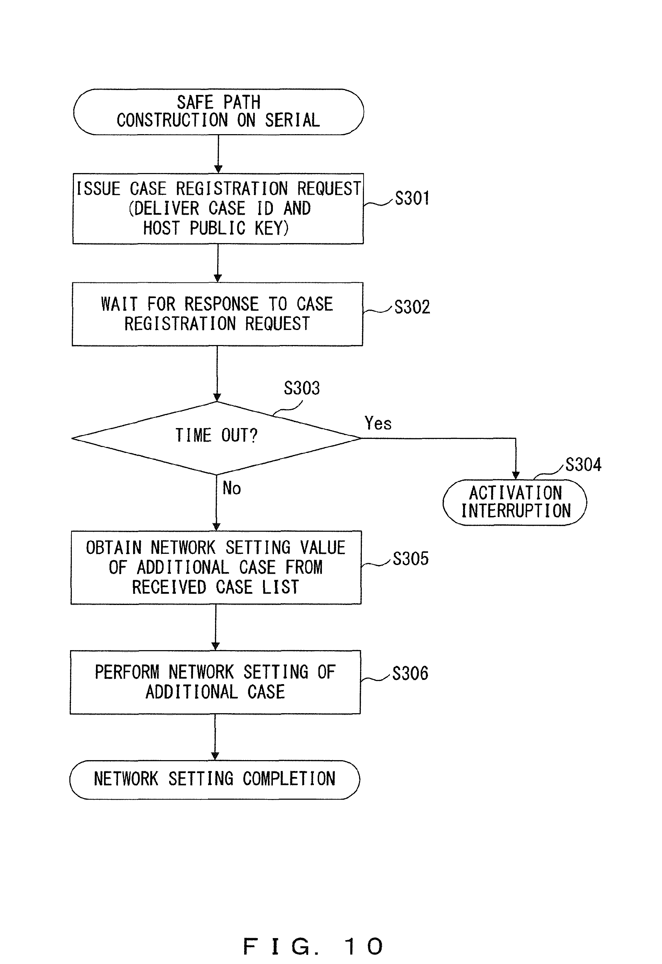

FIG. 10 is a flowchart that explains an example of a setting process of information related to a network of an additional case. FIG. 10 is a flowchart that explains a process executed by the additional case 120 after the process in S109 in FIG. 8. The processes in the respective steps in FIG. 10 are executed by the control unit 112d of the additional case 120 illustrated in FIG. 1.

The control unit 112d reports to the case 110 a request that case information related to the additional case 120 be registered (step S301). The control unit 112d waits for a response to the request that the case information be registered (step S302). The control unit 112d determines whether or not a prescribed period of time has elapsed as a period of time for waiting for the request that the case information be registered (step S303). The control unit 112d terminates the process (step S304 and YES in step S303). The control unit 112d obtains information which is related to the network corresponding to the additional case 120 and which is included in the response to the request that the case information be registered (step S305 and NO in step S303). The control unit 112d performs a network setting of the additional case 120 (step S306). The control unit 112d completes the network setting of the additional case 120.

Note that the prescribed period of time in S303 may be changed by an administrator and is not limited to a particular period of time.

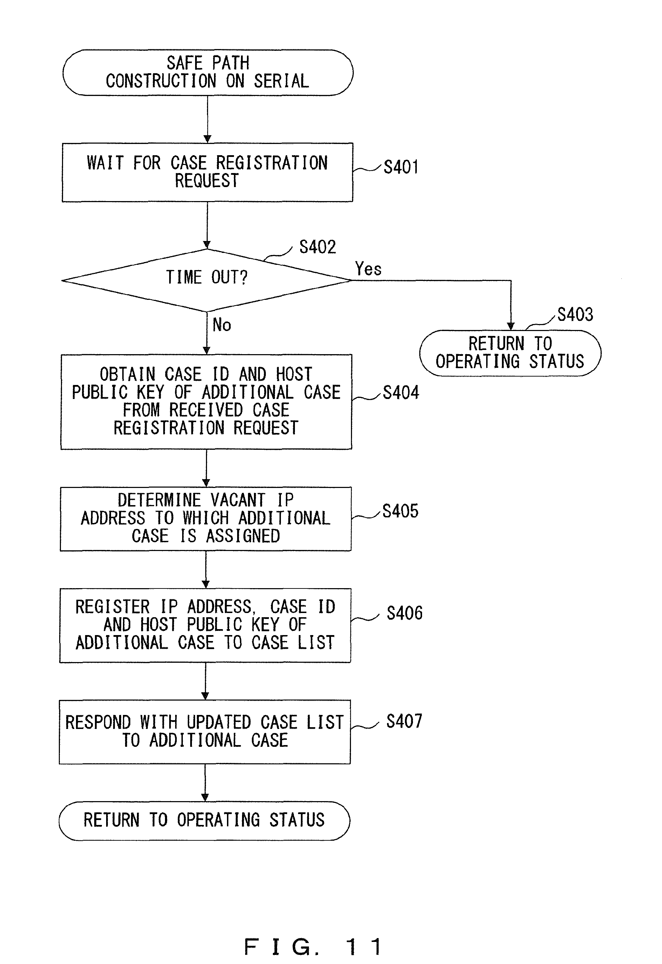

FIG. 11 is a flowchart that explains an example of a process of assigning an IP address to an additional case. FIG. 11 is a flowchart that explains a process executed by the case 110 after the process in S207 in FIG. 9. The processes in the respective steps in FIG. 11 are executed by any of the control units 112a through 112c of the cases 110a through 110c illustrated in FIG. 1. The process in FIG. 11 may be executed by a case that has already been incorporated into the BB system. In the example of FIG. 11, the case 110a performs communications with the additional case 120 as a representative of the BB system.

The control unit 112a waits for a request that the case information related to the additional case 120 be registered (step S401). The control unit 112a determines whether or not a prescribed period of time has elapsed as a period of time for waiting for the request that the case information be registered (step S402). The control unit 112a terminates the process of assigning an IP address to the additional case 120 (step S403 and YES in step S402). The control unit 112a obtains the case ID and the host public key which are included in the request that the case information related to the additional case 120 be registered (step S404 and NO in step S402). The control unit 112a selects an IP address to be assigned to the additional case from a scope of IP addresses that has been set beforehand (step S405). The control unit 112a registers information related to the IP address, the case ID, and the host public key of the additional case 120 in the case list of the case 110 (step S406) . The control unit 112a transmits the updated case list to the additional case 120 (step S407).

Note that the prescribed period of time in S402 may be changed by an administrator and is not limited to a particular period of time.

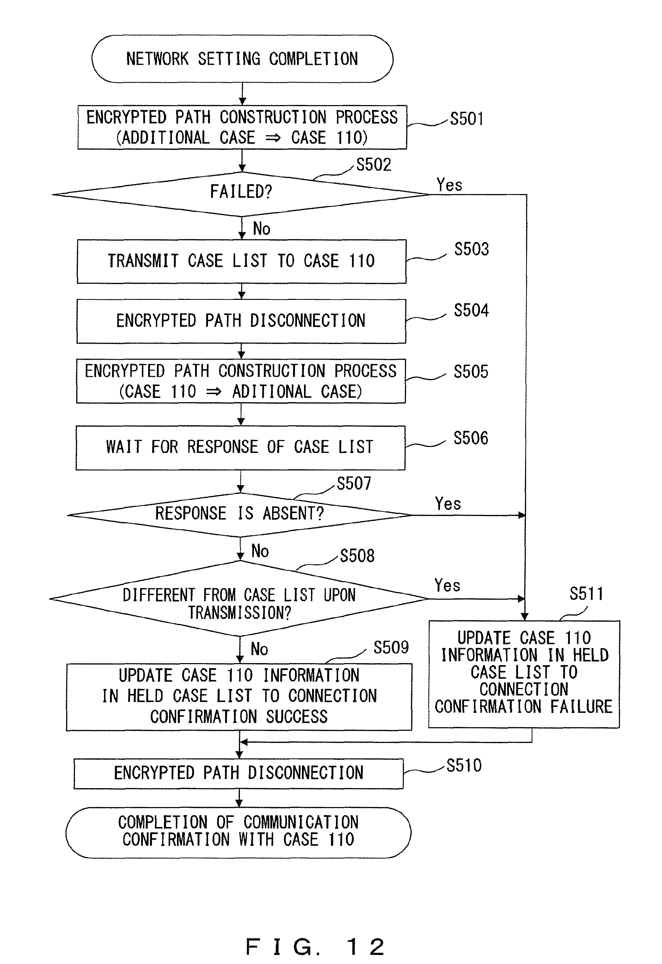

FIG. 12 is a flowchart that explains an example of an access confirmation process from an additional case. FIG. 12 is a flowchart that explains a process executed by the additional case 120 after the process in S306 illustrated in FIG. 10. The processes in the respective steps in FIG. 12 are executed by the control unit 112d of the additional case 120 illustrated in FIG. 1.

The control unit 112d executes a forming process of an encrypted path for the case 110 (step S501). The control unit 112d determines whether or not the forming process of an encrypted path in S501 failed (step S502). The control unit 112d transmits the case list to the case 110 (step S503). The control unit 112d disconnects the encrypted path (step S504). The encrypted path is formed between the case 110 and the additional case 120 (step S505). The control unit 112d waits for a response of the case list from the case 110 (step S506). The control unit 112d determines whether or not the response of a case list is absent (step S507). The control unit 112d determines whether or not the case list received in step S507 and the case list transmitted in S503 are different (step S508 and NO in step S507). The control unit 112d sets to success the status of the access confirmation with the case 110 in the held case list (step S509 and NO in step S508). The control unit 112d sets to failure the status of the access confirmation with the case 110 in the held case list (step S511, YES in step S502, YES in step S507, and YES in step S508). The control unit 112d disconnects the encrypted path (step S510).

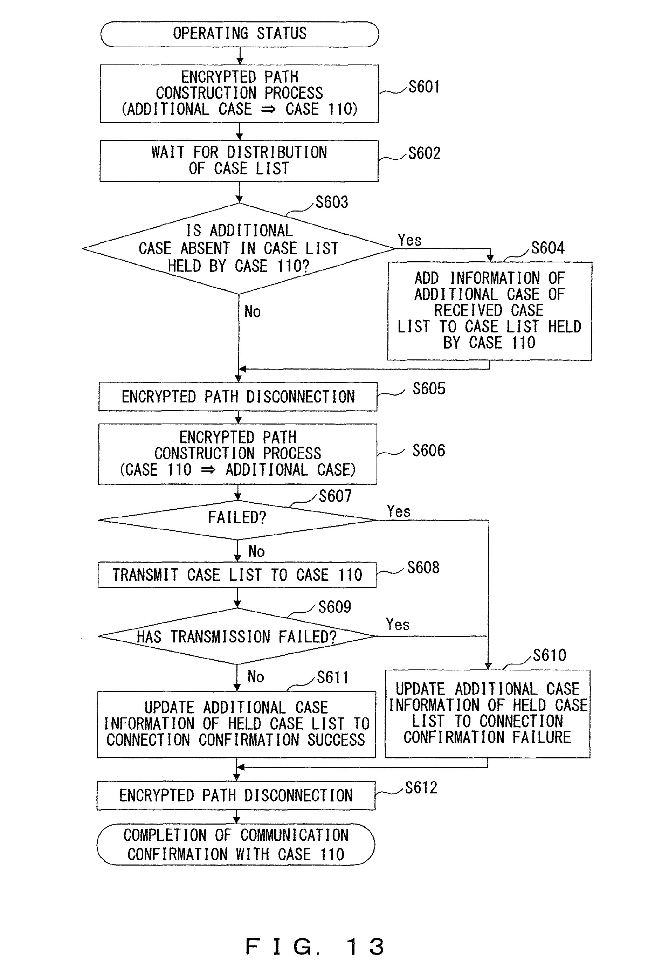

FIG. 13 is a flowchart that explains an example of an access confirmation process on the side of the case that belongs to the BB system. FIG. 13 is a flowchart that explains a process executed by the case 110 after the process in S407 in FIG. 11. The processes in the respective steps in FIG. 13 are executed by any of the control units 112a through 112c of the cases 110a through 110c illustrated in FIG. 1. The process in FIG. 13 may be executed by a case that has already been incorporated into the BB system. In the example in FIG. 13, the case 110a performs communications with the additional case 120 as the representative of the BB system.

An encrypted path is formed between the case 110 and the additional case 120 (step S601). The control unit 112a waits for a case list to be distributed (step S602). The control unit 112a determines whether or not the case list held by the case 110a includes information related to the additional case 120 (step S603). The control unit 112a registers information related to the additional case 120 in the case list (step S604 and YES in step S603). The control unit 112a disconnects the encrypted path (step S605 and NO in step S603).

The control unit 112a performs a forming process of an encrypted path for the additional case 120 (step S606). The control unit 112a determines whether or not the forming of the encrypted path failed (step S607). The control unit 112a transmits the case list to the additional case 120 (step S608 and NO in step S607). The control unit 112a determines whether or not the transmission of the case list failed (step S609). The control unit 112a sets to failure the status of the access confirmation with the additional case in the case list held by the case 110 (step S610 and YES in step S609). The control unit 112a sets to success the status of the access confirmation with the additional case in the case list held by the case 110 (step S611 and NO in step S609). The control unit 112a disconnects the encrypted path (step S612).

As described above, according to the method of an embodiment, the IP address of the additional case 120 is set automatically, and it is possible to automate processes up to the bidirectional access confirmation with all cases belonging to the BB system.

### <Others>

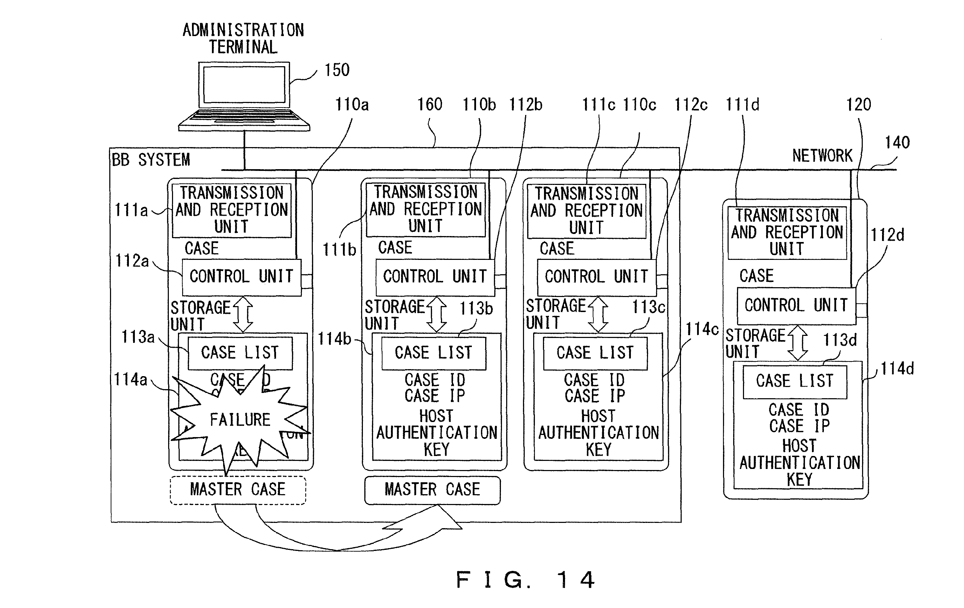

FIG. 14 explains an example of a process in which a master case is replaced when a failure has occurred. In FIG. 14, the same elements as in FIG. 1 are denoted by the same symbols. In FIG. 1, the additional case 120 performs communications with the case 110a. A case is illustrated in which the case 110a has failed so that communication between the additional case 120 and the case 110a is impossible via the serial cable 130. When the case 110a has failed, the process of the case 110a is taken over by the case 110b. Since the master case is in some cases replaced as illustrated in FIG. 14, the host public key is held by all cases.

## Claims

1. An information processing apparatus including a plurality of information processing elements, the information processing apparatus comprising:
a transmission unit (111d) that is provided in a first information processing element(120) newly connected to the information processing apparatus and that transmits identification information of the first information processing element(120) to a second information processing element(110) among the plurality of information processing elements;
a first control unit (112a) that is provided in the second information processing element(110) and that assigns address information to identification information of the first information processing element(120), generates element information including address information corresponding to identification information of each information processing element already implemented in the information processing apparatus and identification information of the first information processing element(120), and returns the element information to the first information processing element (120), when identification information of the first information processing element (120) is received from the first information processing element(120); and
a second control unit(112d) that is provided in the first information processing element(120) and that performs communication with an information processing element already implemented in the information processing apparatus by using, as a communication source, address information included in the element information received from the second information processing element(110).

2. The information processing apparatus according to claim 1, wherein
the first information processing element (120) generates a common key used for communication between the first information processing element (120) and the second information processing element(110) and makes the first information processing element (120) and the second information processing element(110) share the common key.

3. The information processing apparatus according to claim 2, wherein
the transmission unit(111d) encrypts identification information and a host public key of the first information processing element (120) by using the common key and transmits the encrypted identification information and the encrypted host public key.

4. The information processing apparatus according to one of claims 1 through 3, wherein
an information processing element already implemented in the information processing apparatus confirms a communication status with the first information processing element(120) by receiving the element information from the second control unit(112d).

5. The information processing apparatus according to one of claims 1 through 4, wherein
the first information processing element(120) and the second information processing element (110) are connected by a communication line that is different from a communication line via which the second control unit (112d) performs communication with the information processing element already implemented in the information processing apparatus.

6. The information processing apparatus according to one of claims 1 through 5, wherein
when the second information processing element(110) failed, a third information processing element among the plurality of information processing elements takes over a process of the second information processing element(110).

7. An information processing program for causing a plurality of information processing elements to execute the process comprising:
transmitting identification information of a first information processing element(120) to a second information processing element(110) among the plurality of information processing elements by the first information processing element(120) newly connected to an information processing apparatus;
receiving from the second information processing element(110) element information including address information corresponding to identification information of each information processing element already implemented in the information processing apparatus and identification information of the first information processing element (120) ; and
performing communication with an information processing element already implemented in the information processing apparatus by using address information included in the received element information as a communication source.

8. The information processing program according to claim 7, wherein the process further comprising:
generating a common key used for communication between the first information processing element(120) and the second information processing element(110); and
making the first information processing element (120) and the second information processing element (110) share the common key.

9. The information processing program according to claim 8, wherein the process further comprising:
encrypting identification information and a host public key of the first information processing element (120) by using the common key; and
transmitting the encrypted identification information and the encrypted host public key.

10. An information processing method executed by a plurality of information processing elements, the information processing method comprising:
transmitting identification information of a first information processing element(120) to a second information processing element(110) among the plurality of information processing elements by the first information processing element(120) newly connected to an information processing apparatus;
assigning, by the second information processing element(110), address information to identification information of the first information processing element (120), generating element information including address information corresponding to identification information of each information processing element already implemented in the information processing apparatus and identification information of the first information processing element (120), and returning the element information to the first information processing element(120), when identification information of the first information processing element (120) is received from the first information processing element(120); and
performing, by the first information processing element(120), communication with an information processing element already implemented in the information processing apparatus by using, as a communication source, address information included in the element information received from the second information processing element(110).

11. An information processing method according to claim 10, wherein
the first information processing element (120) generates a common key to be used for communication between the first information processing element (120) and the second information processing element(110) and makes the first information processing element (120) and the second information processing element(110) share the common key.

12. The information processing method according to claim 11, wherein
identification information and a host public key of the first information processing element(120) are encrypted by using the common key, and the encrypted identification information and the encrypted host public key are transmitted.

13. The information processing method according to claim 11 or 12, wherein
an information processing element already implemented in the information processing apparatus confirms a communication status with the first information processing element(120) by receiving the element information from the second control unit(112d).
